# EUROPEAN PATENT SPECIFICATION

(11) **EP 4 483 031 B1**
(45) Date of publication and mention of the grant of the patent: **04.03.2026**
(21) Application number: 23700961.8
(22) Date of filing: 13.01.2023
(51) Int. Cl.: E06B 9/42, F16B 2/14

(54) **RAIL FOR A COVERING**
LEISTE FÜR EINEN VORHANG
RAIL POUR UNE COUVERTURE

(30) Priority: 25.02.2022 GB 202202618
(43) Date of publication of application: 01.01.2025
(73) Proprietor: Hunter Douglas Industries B.V., 3011 GB Rotterdam (NL)
(72) Inventor: BOHLEN, Jörg, 3071 EL Rotterdam (NL)
(74) Representative: J A Kemp LLP
(86) International application number: PCT/EP2023/050727
(87) International publication number: WO 2023/160901

(56) References cited:
- AU-B2- 2009 203 048
- GB-A- 1 150 879
- NL-A- 8 802 909
- US-A- 3 970 402
- US-A1- 2012 097 346

## Description

The present application relates to a rail for a covering, for example a bottom rail for a fabric of a an architectural opening covering such as a window covering, together with a method of fitting a fabric of a covering to such a rail.

Various coverings for windows are known, including those in which a fabric is used. In order to provide a neat finish to the distal end of a piece of fabric, it is known to secure a rail along the edge forming that distal end. Such a rail may be secured in various manners. For example, reference may be made to US 3,970,402, NL 8802909, GB 1,150,879, US 2012/097,346 and AU 2009/203,048.

It would be desirable to be able to secure a rail to an edge of a piece of fabric easily and efficiently, and for the rail to remain secured for an extended period of time.

According to the present invention according to claim 1, there is provided a rail, such as a bottom rail, for a fabric of a covering, such as an architectural opening covering, for example a window covering. The rail includes a rail profile extending elongately in a first direction and laterally in a second direction between a fabric edge and a wedge edge, the second direction being perpendicular to the first direction, and a wedge. The rail profile includes a first wall extending in the first direction and extending in the second direction between the fabric edge and the wedge edge, a second wall extending in the first direction and extending in the second direction between the fabric edge and the wedge edge, the first wall being separated from the second wall in a third direction perpendicular to the first and second directions, the first wall having an inner surface and the second wall having an inner surface, the inner surface of the first wall facing the inner surface of the second wall, and a middle wall extending in the first direction and extending from a location on the inner surface of the first wall to a location on the inner surface of the second wall. The middle wall, together with the inner surface of the first wall and the inner surface of the second wall between the middle wall and the wedge edge, may define therebetween a wedge channel for receiving the wedge, and the middle wall, together with the inner surface of the first wall and the inner surface of the second wall between the middle wall and the fabric edge, define therebetween a fabric channel for receiving a fabric of a window covering. The middle wall may be at least partially elastic and the first wall, the second wall and the middle wall may be configured such that, with the middle wall in a relaxed state, the inner surface of the first wall and the inner surface of the second wall at the fabric edge define therebetween a fabric entrance through which the fabric is able to pass into the fabric channel and the inner surface of the first wall and the inner surface of the second wall at the wedge edge define therebetween a wedge entrance to the wedge channel. The wedge may extend in an elongate direction and has a cross section along the length of the elongate direction including a triangular portion tapering from an apex to a wide portion. The middle wall may include an elongate deflection protruding in the second direction towards the fabric edge and defining the wedge channel with an extension in the second direction towards the fabric edge to accommodate the apex of the wedge when positioned within the wedge channel. The extension of the middle wall from the inner surface of the first wall to the inner surface of the second wall may include, in succession, extension in the second direction towards the fabric edge, then extension in the third direction, then extension in the second direction towards the wedge edge, thereby to provide the elongate deflection. The midpoint of the middle wall between the inner surface of the first wall and the inner surface of the second wall may be closer to the fabric edge than to the wedge edge.

This arrangement simultaneously addresses a number of conflicting requirements and provides associated benefits. By the middle wall being at least partially elastic, it allows elastic deformation of the middle wall which can provide sustained gripping of the fabric at the fabric end. By forming the middle wall with the elongate deflection, the length of the middle wall may be increased, thereby allowing a greater extent of elastic deformation for the same material properties of the middle wall. Also, the elongate deflection allows the wedge to extend further within the rail profile towards the fabric edge such that the taper of the wedge may have a smaller/shallower angle, thereby facilitating its insertion into the wedge channel through the wedge entrance. Because of the elongate deflection of the middle wall, the midpoint of the middle wall is closer to the fabric edge such that the point of rotation/pivoting of the first and second walls when the wedge is pressed into the wedge channel until the first and second walls meet at the fabric edge, is closer to the fabric edge, thereby improving/facilitating insertion of the wedge into the wedge channel.

The locations from which the middle wall extends from the inner surface of the first wall and to which the middle wall extends to the inner surface of the second wall may be closer to the wedge end than to the fabric edge.

In this way, the length of the middle wall between the first and second walls can be increased so as to allow greater elastic movement.

The locations may be spaced from the wedge edge by a length of between one quarter and one third of the distance between the wedge edge and the fabric edge.

The thickness of the middle wall may be less than the thickness of the first wall and the thickness of the second wall, such that movement of the first wall and the second wall away from each other at the wedge edge causes elastic deformation of the middle wall in preference to deflection of the first wall and the second wall.

Functionally, the wedge deflects the first and second walls away from each other at the wedge edge so as to cause the first and second walls to grip the fabric at the fabric edge. This is achieved by the elastic resilience of the rail profile. Some elastic deformation may occur in the first and second walls, thereby contributing to the gripping of the fabric. However, it may be desirable for the first and second walls to maintain a relatively fixed profile shape. In this case, it may be desirable for the first and second walls to have small or negligible elastic deformation. By choosing appropriate relative thicknesses of the middle wall and the first and second walls, it is possible to achieve substantially all of the elastic deformation in the middle wall.

The thickness of the middle wall may vary along its extension between the inner surface of the first wall and the inner surface of the second wall. For example, at the locations where the middle wall meets the first and second wall, the thickness of the middle wall may be greater, for example similar to that of the first and second walls. In this way, the elastic deformation can be directed towards a central portion of the middle wall. This will be advantageous especially when the first and second walls first pivot/rotate until they meet at the fabric end.

At the fabric edge, the first wall may include a first smooth and rounded surface for gripping one side of the fabric and the second wall may include a second smooth and rounded surface for gripping the other side of the fabric.

During assembly, a fabric is inserted through the fabric entrance into the fabric channel and then the first and second walls are deflected by the wedge until the first and second walls contact and then grip the fabric. It is desirable that the fabric maintains a flat or unwrinkled state. In this respect, any teeth at the fabric end of the first and second walls will tend to form wrinkles in the fabric. Similarly flat, or sharp edges may cause such wrinkles. By providing smooth and rounded surfaces, it is possible to first contact and then grip the fabric without forming wrinkles.

The rail profile may be formed as a single extruded component, for example from aluminium or an alloy thereof.

In one arrangement, the rail profile, with the elongate direction of the wedge parallel with the first direction of the rail profile, may be configured to receive, at a first relative position of the wedge, the apex of the wedge in the wedged entrance between the inner surface of the first wall and the inner surface of the second wall, to allow the wedge to be moved from the first relative position inwardly into the wedge channel to a second relative position so that the triangular portion rotates the first wall and the second wall about the middle wall and thereby moves the first wall and the second wall away from each other at the wedge edge and moves the first wall and the second wall towards each other at the fabric edge to close the fabric entrance and contact the fabric between the inner surface of the first wall and the inner surface of the second wall, and to allow the wedge to be moved from the second relative position further inwardly into the wedge channel to a third relative position so that the triangular portion rotates the first wall and the second wall about the fabric edge where the first and second walls contact the fabric and thereby further moves the first wall and the second wall away from each other at the wedge edge by elastically deforming the middle wall, the middle wall being configured, in the third relative position, to press resiliently the first wall and the second wall towards each other at the fabric edge so as to press upon and grip the fabric.

In this way, the rail profile and wedge allow a smooth transition from the first relative position in which the fabric is loosely positioned in the fabric channel, to the second relative position in which the first and second walls first contact either side of the fabric, and to the third relative position in which the fabric is gripped securely/firmly between the first and second walls by virtue of the elastic deformation and returning resilient force of the middle wall. This returning resilient force may be sustained for a long period of time, thereby maintaining the grip on the fabric.

The cross-section of the wedge may include, on an opposite side of the wide portion to the apex, a tapered portion which tapers inwardly in a direction away from the wide portion.

The tapered portion may be used to hold the wedge securely within the rail profile.

**In** one arrangement, at least with the wedge in the third relative position within the wedge channel, proximate the wedge edge, the inner surfaces of the first and second walls taper inwardly towards each other in a direction towards the wedge edge, and, with the wedge edge in the third relative position within the wedge channel, the resilient returning force of the elastic deformation of the middle wall acts to press the inner surfaces of the first and second walls against the tapered portion of the wedge so as to retain the wedge within the wedge channel in the third relative position.

**In** this way, the wedge is held securely within the rail profile and, because of the actions of the wedge on the first and second walls, the fabric is gripped securely at the fabric end.

**In** one arrangement, the rail profile may be configured to allow the wedge to be moved from the second relative position to the third relative position via an intermediate relative position at which the resilient returning force of the elastic deformation of the middle wall acts to press the inner surfaces of the first and second walls proximate the wedge edge against the wide portion of the wedge, and to allow the wedge to be moved from the intermediate relative position within the wedge channel further inwardly into the wedge channel to the third relative position, so that the tapered portion of the wedge causes the first wall and second wall to move closer to each other at the wedge edge.

Thus, as the wedge is pressed progressively into the wedge channel, the first and second walls are spread further and further apart until the wedge end of the first and second walls are at the wide portion of the wedge. Beyond this point, the wedge end of the first and second walls move inwardly towards each other by a small amount corresponding to the taper of the tapered portion of the wedge. The tapered portion of the wedge is thus arranged to taper inwardly by a small amount which does not affect significantly the grip on the fabric, but is enough to secure the wedge within the wedge channel.

**In** one arrangement, the wedge may include a base, the tapered portion extending between the base and the wide portion. The base may include, on each opposite side of the cross-section, a respective ledge extending in the elongate direction and protruding beyond the tapered portion by the thickness of the respective first and second wall such that, with the wedge in the third relative position within the wedge channel, the first and second walls form respective flush surfaces with the respective ledges.

In this way, the assembly of the wedge in the rail profile is aesthetically pleasing. Furthermore, the interface between the wedge and the rail profile is smooth and not prone to catching on any other components.

In some arrangements, the base may include further decorative or functional features, such as components for abutting against an architectural opening surround.

According to the present invention according to claim 14, there is also provided a method of fitting a fabric of a covering to a rail as defined above. The method further includes inserting an edge of the fabric through the fabric entrance of the rail profile and positioning the edge of the fabric within the fabric channel such that the fabric extends through the fabric entrance, positioning the wedge in the first relative position with the apex of the wedge in the wedge entrance between the inner surface of the first wall and the inner surface of the second wall of the rail profile, and pressing the wedge in the second direction of the rail profile towards the fabric edge so as to move the wedge from the first relative position to the second relative position thereby rotating the first and second walls about the middle wall until the fabric entrance is closed and the fabric is contacted and held between the first and second walls, and so as then to move the wedge from the second relative position to the third relative position thereby rotating the first and second walls about the fabric edge where the first and second walls contact the fabric whilst elastically deforming the middle wall so that the middle wall provides the resilient returning force to grip the fabric between the first and second walls at the fabric edge.

Thus there is provided a simple and efficient method for securing a rail to a fabric. No additional fasteners are required. The ongoing resilient returning force of the middle wall ensures that the fabric is secured over an extended period of time.

When used with a wedge having the tapered portion, the method may be such that, when the wedge is moved from the second relative position to the third relative position, the wedge moves via an intermediate relative position at which the resilient returning force of the elastic deformation of the middle wall acts to press the inner surfaces of the first and second walls proximate the wedge edge against the wide portion of the wedge. The method may include moving the wedge from the intermediate relative position within the wedge channel further inwardly into the wedge channel to the third relative position so that the tapered portion of the wedge causes the first wall and second wall to move closer to each other at the wedge edge.

In this way, the method also ensures that the wedge is securely held in place in the rail profile.

The invention will be more clearly understood from the following description, given by way of example only, with reference to the accompanying drawings, in which:
Figure 1 illustrates a window covering including a rail embodying the present invention;
Figure 2 illustrates the end of a rail embodying the present invention;
Figure 3 illustrates a cross-section of the rail;
Figures 4(a) to (d) illustrates steps of clamping a fabric in the rail;
Figure 5 illustrates details of the rail profile of the rail;
Figure 6 illustrates details of an end cap;
Figure 7 illustrates a cross-section of the rail;
Figure 8 illustrates a cross-section of the rail with an alternative wedge; and
Figure 9 illustrates an apparatus for assembling the rail.

Various blinds and coverings are known for architectural openings such as windows. Such coverings often include fabrics. It is sometimes desirable to provide a rail along one edge of such a fabric.

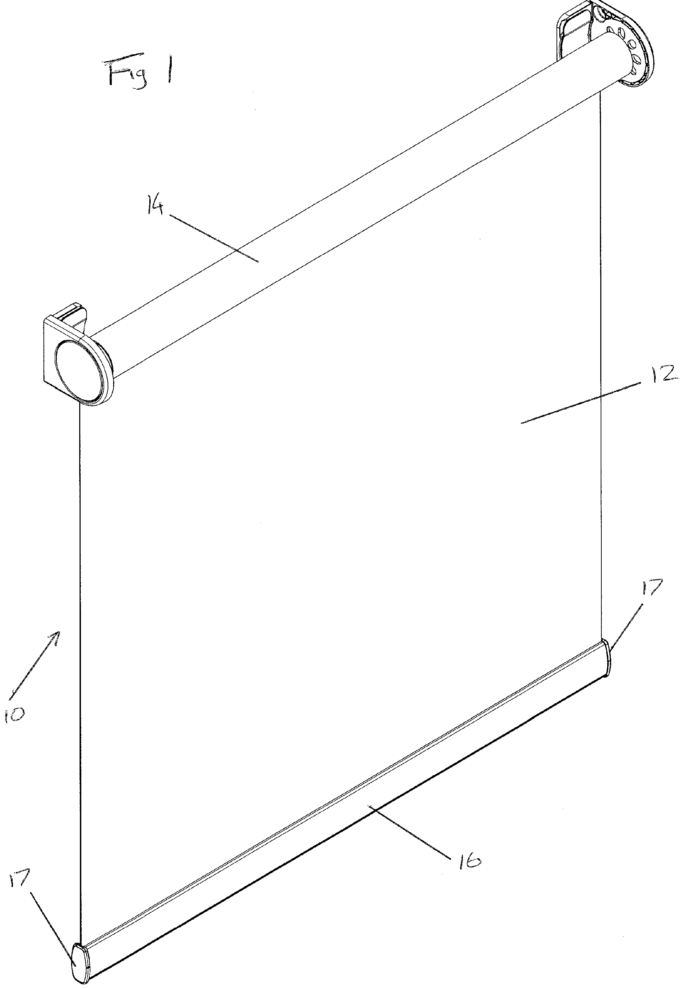

Fig. 1 illustrates an example of a window covering 10 including a fabric 12 and a roller 14 as part of a roller blind. The fabric 12 may be extended from and retracted back onto the roller 14 so as to cover selectively an architectural opening. The distal edge of the fabric 12, as illustrated, is provided with a rail 16 according to the present invention.

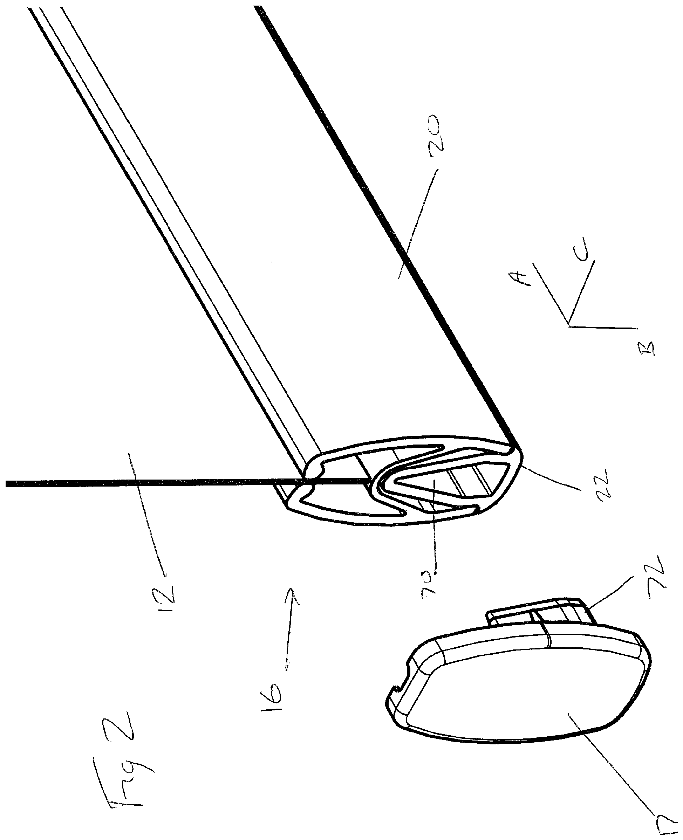

A portion of the rail 16 is illustrated in greater detail in fig. 2. The rail 16 includes a rail profile 20 and a wedge 22. As will be described in greater detail below, the wedge 22 is fitted within the rail profile 20 and acts to resiliently deform the rail profile 20 so that the rail profile 20 grips the fabric 12.

As illustrated, the rail profile 20 extends elongately in a first direction A and laterally in a second direction B. It also has a depth in a third direction C. Similarly, the wedge 22 extends in an elongate direction which, when the wedge 22 is fitted to the rail profile 20, also extend in the first direction A.

Both the rail profile 20 and the wedge 22 may be formed/manufactured in any known manner using any appropriate material. However, for the illustrated arrangement, it is desirable to form the rail profile as a single extruded component from aluminium or an alloy thereof. Similarly, the wedge 22 may be formed as a single extruded component of aluminium or an alloy thereof.

An end cap 17 may be provided for fitment to each end of the rail 16. As will be discussed below, this may be secured to the end of the wedge 22.

Further details of the rail profile 20 and the wedge 22 will be discussed with reference to cross sections through the rail profile 20 and the wedge 22.

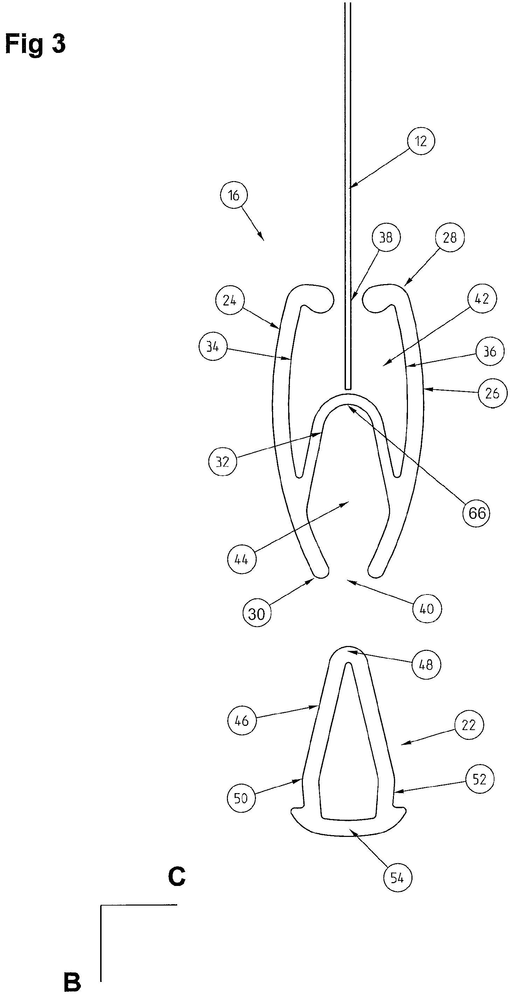

As illustrated in fig. 3, the rail profile 20 includes a first wall 24 and a second wall 26. The first wall 24 and the second wall 26 both extend not only elongately in the first direction A, but also laterally in the second direction B. In particular, the rail profile 20 has a fabric edge 28 and a wedge edge 30 and the first wall 24 and the second wall 26 extend laterally in the second direction B between the fabric edge 28 and the wedge edge 30.

The first wall 24 and the second wall 26 are connected by a middle wall 32. The first wall 24 has an inner surface 34 and the second wall 26 has an inner surface 36. As illustrated, the middle wall 32 extends between the inner surface 34 of the first wall 26 and the inner surface 36 of the second wall 26. Although it would be enough to provide one or more such middle walls 32 at various locations along the elongate length of the rail profile 20, in the illustrated arrangement, which is formed as an extrusion, the middle wall 32 extends elongately along the entire length of the rail profile 20 in the first direction A. It also extends generally in the third direction C between the facing inner surfaces 34, 36 of the first and second walls 24, 26. In this way, the first and second walls 24, 26 are secured to each other by means of the middle wall 32 but separated from one another in the third direction C.

The rail profile 20, especially the middle wall 32, is resiliently deformable. This will be discussed in greater detail below. However, in the relaxed state as illustrated in fig. 3, the first and second walls 24, 26 are spaced apart at the fabric edge 28 and spaced apart at the wedge edge 30. In particular, as illustrated, in the relaxed state, the first and second walls 24, 26 define, at the fabric edge 28, a fabric entrance 38, and define, at the wedge edge 30, a wedge entrance 40.

Inside the rail profile 20, the middle wall 32 on the side of the fabric edge and the inner surfaces 34, 36 of the first and second walls 24, 26 define a fabric channel 42. Similarly, the middle wall 32 on the side of the wedge edge and the inner surfaces 34, 36 of the first and second walls 24, 26 define a wedge channel 44.

The fabric entrance 38 provides an entrance into the fabric channel 42. Similarly, the wedge entrance 40 provides an entrance to the wedge channel 44.

As illustrated, in the relaxed state, with the first and second walls 24, 26 spaced apart at the fabric edge 28 so as to provide the fabric entrance 38, it is possible easily to insert the edge of the fabric 12 through the fabric entrance 38 and into the fabric channel 42.

The wedge 22 includes a triangular portion 46 which tapers from an apex 48 to a wide portion 50. The wedge 22 also includes, on an opposite side of the wide portion 50 to the apex 48, a tapered portion 52 which tapers inwardly in a direction away from the wide portion 50. The wedge 22 also includes a base 54. As illustrated, the tapered portion 52 extends between the base 54 and the wide portion 50. In particular, the width of the wedge 22 in the third direction C increases slightly between the location where the tapered portion 52 joins the base 54 and the wide portion 50.

Use of the rail 16, in particular how the wedge 22 is fitted to the rail 20 so as to secure the fabric 12, will now be described below.

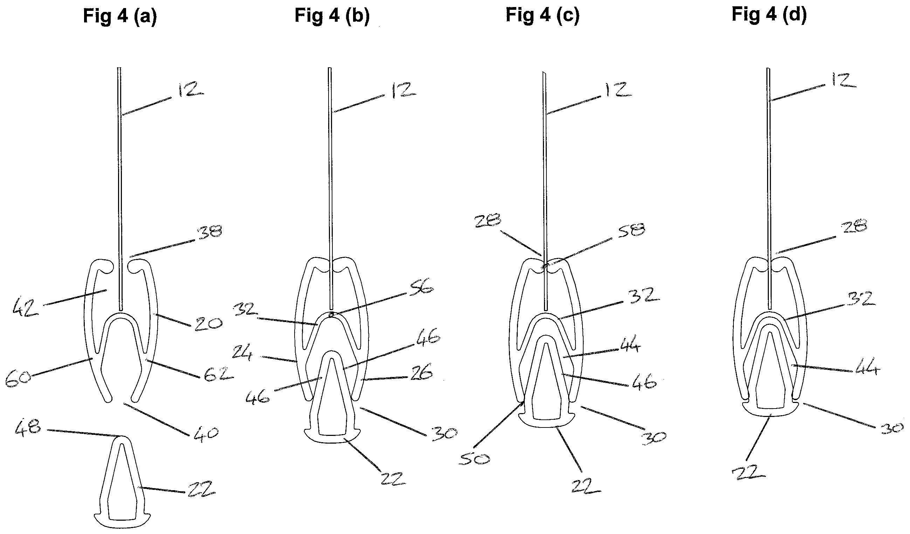

As illustrated in fig. 4(a), with the same arrangement as illustrated in fig. 3, the bottom rail 20 is in the relaxed state and the wedge 22 is brought into alignment with the rail profile 20. In particular, the elongate direction of the wedge 22 is oriented in the first direction A and the apex 48 is positioned adjacent or just inside the wedge entrance 40 to the wedge channel 44. This will be described as the first relative position.

Also, as noted above, in this relaxed state of the rail profile 20, it is possible to insert the edge of the fabric 12 through the fabric entrance 38 into the fabric channel 42.

As illustrated in fig. 4(a), the fabric 12 is inserted in a straight path only as far as meeting the middle wall 32. However, as will be discussed below, the fabric 12 could be inserted further inside the fabric channel 42 along an inner surface 34,36 of one of the first and second walls 24, 26.

By pressing the wedge 22 in the second direction B towards the fabric edge 28, as illustrated in fig. 4(b), the apex 48 of the wedge 22 is moved inwardly of the wedge channel 44 and the inner surfaces of the first and second walls 24, 26 are forced along the tapered portion 46 of the wedge 22. As the first and second walls 24, 26 at the wedge end 30 traverse the outer surface of the tapered portion 46, the first and second walls 24, 26 at the wedge end 30 are forced away from each other by the wedge 22.

In the illustrated arrangement, the middle wall 32 is more flexible than the first and second walls 24, 26. For example, in the illustrated arrangement, where the rail portion 20 is formed as a single extrusion, the middle wall 32 is less thick than the first and second walls 24, 26. As a result, when the first and second walls 24, 26 are forced away from each other at the wedge end 30, the first and second walls 24, 26 pivot around a point 56 in the middle wall 32 midway between the first and second walls 24, 26 in the third direction C. This deflection and pivoting of the first and second walls 24, 26 continues until the rail portion 20 and wedge 22 reach a second relative position at which the first wall 24 and second wall 26 contact either respective side of the fabric 12. With the first and second walls 24, 26 abutting each other via the fabric 12 at the fabric end 28 of the rail profile 20, further pivoting of the first and second walls 24, 26 around the point 56 is no longer possible.

Pressing the wedge 22 further inwardly into the wedge channel 44 causes the ends of the first and second walls 24, 26 at the wedge end 30 to continue to traverse the outer surface of the tapered portion 46 of the wedge 22. As a result, of course, the ends of the first and second walls 24, 26 at the wedge end 30 are forced further outwardly away from each other. Noting, as above, that the first and second walls 24, 26 can no longer pivot around point 56 in the middle wall 32, the first and second walls 24, 26 now pivot about the point 58 at which the ends of the first and second walls 24, 26 at the fabric end press onto either respective side of the fabric 12. In order for this rotation/deflection to occur, the middle wall 32 is resiliently deformed. In particular, the locations 60, 62 where the middle wall 32 joins with the inner surfaces 34, 36 of the first and second walls 24, 26 are moved away from each other as the first and second walls 24, 26 pivot about the point 58. This resilient deformation of the middle wall 32 creates a restoring resilient force in the middle wall 32 which acts to press together the first and second walls 24, 26 at the fabric end 28 and, thereby, grip either side of the fabric 12 with that restoring resilient force.

Fig. 4(c) illustrates this situation where the ends of the first and second walls 24, 26 are at the wide portion 50 of the wedge 22.

Merely for the purpose of securely gripping the fabric 12, the relative position illustrated in fig. 4(c) would achieve the required result. However, the illustrated arrangement includes a wedge 20 which, as described above, includes a tapered portion 52 which tapers inwardly from the wide portion 50 towards the base 54.

By pressing the wedge 22 yet further into the wedge channel 44, the inner surfaces 34, 36 of the first and second walls 24, 26 traverse beyond the wide portion 50 of the wedge 22 along the tapered portion 52. Along the tapered portion 52, the ends of the first and second walls 24, 26 move slightly inwardly towards one another. As a result, the resilient restoring force in the middle wall 32 is slightly reduced and the gripping force of the first and second walls 24, 26 on the fabric 12 at the fabric end 28 is also slightly reduced. However, the rail profile 20 and wedge 22 are configured such that even this reduced gripping force is sufficient and appropriate for gripping the fabric 12. It will be appreciated that, as a result of the tapered portion 52, in order to remove the wedge 22 from the wedge channel 44, it would be necessary to spread apart the first and second walls 24, 26 at the wedge end 30, against the resilient restoring force of the middle wall 32. Hence, in the relative position illustrated in fig. 4(d), the resilient restoring force of the middle wall 32 acts to retain the wedge 22 in the wedge channel 44.

Any of the relative positions between those illustrated in fig. 4(c) and fig. 4(d) can be considered as a third relative position in which resilient restoring force of the middle wall 32 provides a gripping force on the fabric 12 with the ends of the first and second walls 24, 26 at the fabric end 28. Furthermore, if the relative position illustrated in fig. 4(d) is considered as a final third relative position, then the relative position illustrated in fig. 4(c) can be considered as an intermediate third relative position.

With the arrangement as explained above, the rail profile, by means of the middle wall 32, is able to maintain a gripping force on the fabric 12 over an extended period of time even if the resilient restoring force of the middle wall 32 itself diminishes somewhat as a result of creep and such like.

There are some other important features to note in the illustrated arrangement as discussed above. For example, it will be seen that, at the wedge end 28, the ends of the first and second walls 24, 26 are formed as smooth and rounded surfaces. Although it would be possible to provide the ends of the first and second walls 24, 26 with teeth or edges for biting into the respective surfaces of the fabric 12, smooth and rounded surfaces have advantages. In particular, during the process of contacting and then gripping the fabric 12 in the second and third relative positions described above with reference to figs. 4(b) to (d), teeth or sharp edges can have the effect of forming wrinkles in the fabric 12. By providing a smooth and rounded surface on the end of each of the first and second walls 24, 26 respectively, the fabric 12 can be contacted and then gripped without the formation of undesirable wrinkles.

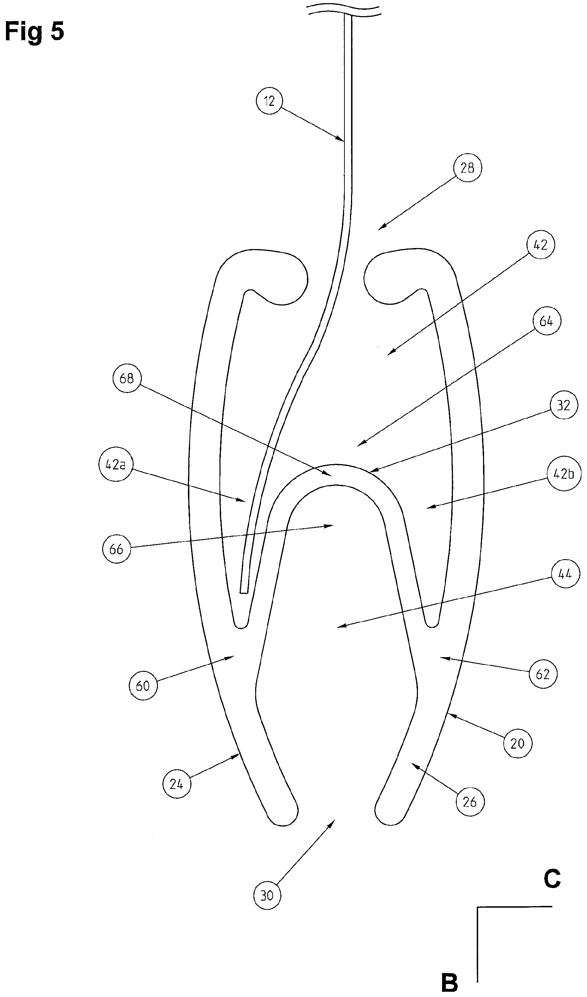

As discussed above, the middle wall 32 provides a bridge between the first and second walls 24, 26 separated in the third direction C. However, the shape and position of the middle wall 32 is of significance. As will be described with reference to fig. 5, the middle wall 32 connects with the first wall 24 at the first location 60 and connects with the second wall 26 at the second location 62. In particular, the middle wall 32 extends away from the inner surface 34 of the first wall 24 at the location 60 across the space between the first and second walls 24, 26, and to the inner surface 36 of the second wall 26, joining the second wall 26 at the second location 62.

The middle wall includes a deflection 64 running along the elongate extent of the rail profile 20 and protruding in the second direction B towards the fabric edge 28. This results in a wedge channel 44 with an extension 66 in the second direction B towards the fabric edge 28. As illustrated especially in fig. 4(d), this extension 66 accommodates the apex 48 of the wedge 22 when the wedge 22 is positioned within the wedge channel 44. As a result, it becomes possible to use a wedge 22 having a longer extent in the second direction B. With a longer extent in the second direction B, a shallower taper may be provided on the tapered section 46 of the wedge 22. As a result, as the wedge 22 is pressed inwardly into the wedge channel 44, the ends of the first and second walls 24, 26 at the wedge end 30 are more gradually forced apart from one another. This facilitates and improves the construction/assembly process.

The elongate deflection 64 of the middle wall 32 also enables the location 60, 62 where the middle wall 32 joins the first and second walls 24, 26 respectively to be positioned towards the wedge end 32 of the rail profile 20.

As illustrated, considering the path of the middle wall 32 from the first location 60 to the second location 62, the middle wall first extends not only in the third direction C towards the second wall 26, but also in the second direction B towards the fabric edge 28. It then extends in the third direction C towards the second wall 26. It then extends not only in the third direction C towards the second wall 26, but also in the second direction B towards the wedge edge 30 and the second location 62. In the illustrated arrangement, this is a continuous path forming a curved or arcuate middle wall.

By providing the locations 60, 62 towards the wedge end 32 and providing the middle wall 32 with the elongate deflection 64, the length of the middle wall 32 between the first location 60 and the second location 62 and the first wall 24 and the second wall 26 is increased as compared with a wall which extends directly in the third direction C between the first wall 24 and the second wall 26. At the same time, the middle wall 32 provides the extension 66 in the wedge channel 44 for accommodating the apex 48 of the longer wedge 22. The additional length of the middle wall 32 allows greater movement of the middle wall 32 during its elastic deformation for the same given properties of the material of the middle wall 32.

The mid-point 68 of the middle wall 32 from the inner surface of the first wall 24 to the inner surface of the second wall 26 in the illustrated arrangement is closer to the fabric edge 28 than to the wedge edge 30. This mid-point 68 corresponds to the point 56, as described with reference to Fig 4(b), in the middle wall 32 midway between the first and second walls 24, 26. As a result, improved pivoting of the first and second walls 24, 26 is achieved when moving between the first relative position and the second relative position as discussed above. The first and second locations 60 and 62 are preferably closer to the wedge edge 30 than to the fabric edge 28. In some arrangements, these locations 60, 62 may be spaced from the wedge edge 30 by a length of between one quarter and one third of the distance between the wedge edge 30 and the fabric edge 28.

As illustrated, noting that the locations 60, 62 are towards the wedge edge 30 and the elongate deflection 64 extends towards the fabric edge 28, the fabric channel 42 is formed with elongate pockets 42a and 42b on either side of the elongate deflection 64 between the middle wall 32 and the inner surfaces 34, 36 of the respective first and second walls 24, 26. In this respect, as illustrated in fig. 5, it is possible to insert the fabric 12 into the fabric channel 42 such that its edge is accommodated within one of these pockets 42a, 42b.

The middle wall 32 may have a generally constant thickness along its path between the first wall 24 and the second wall 26, perhaps with a slight thickening at the first and second locations 60, 62. Alternatively, it is possible for the thickness of the wall 32 to be varied along this path so as to promote elongate deflection at particular places. For example, it may be desirable to thin the middle wall 32 towards its mid-point 68.

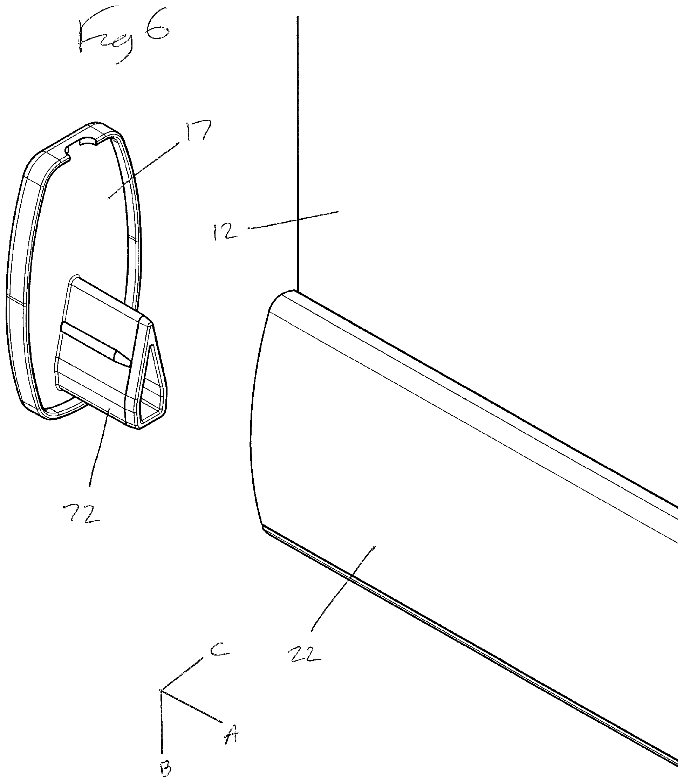

As noted above with reference to figs 1 and 2, it may be desirable to provide respective end caps 17 for covering the open ends of the rail profile 20 and the wedge 22. **In** this respect, the wedge 22 may include an internal configuration 70 for receiving a part 72 of an end cap 17, for example inserted resiliently in the first direction A within the wedge 22. This part 72 of the end cap 17 is further illustrated in Fig 6.

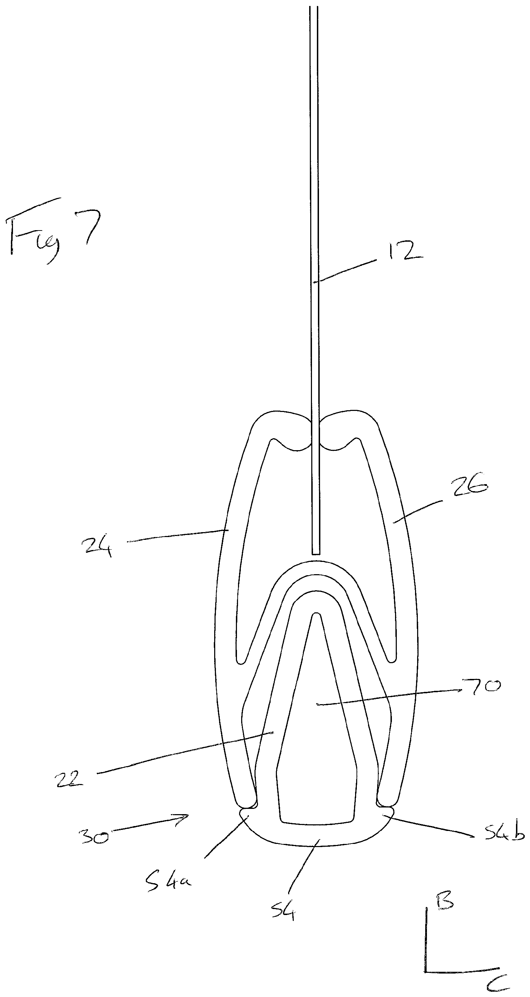

Fig. 7 illustrates a further feature of the base 54. **In** particular, the base 54 includes at each opposite side in the third direction C a respective ledge 54a and 54b. A first ledge 54a extends outwardly from the base 54 in the third direction C by an extent matching the thickness of the first wall 24 at least at the wedge end 30. Similarly, a second ledge 54b extends outwardly in the third direction from the base 54 by an extent matching the thickness of the second wall 26 at least at the wedge end 30. In this way, as illustrated in fig. 7 (and fig. 4(d) above), a smooth outer profile may be provided at the wedge end of the rail 16. The first and second walls 24, 26 form respective flush surfaces with the first and second ledges 54a, 54b leading into the base 54.

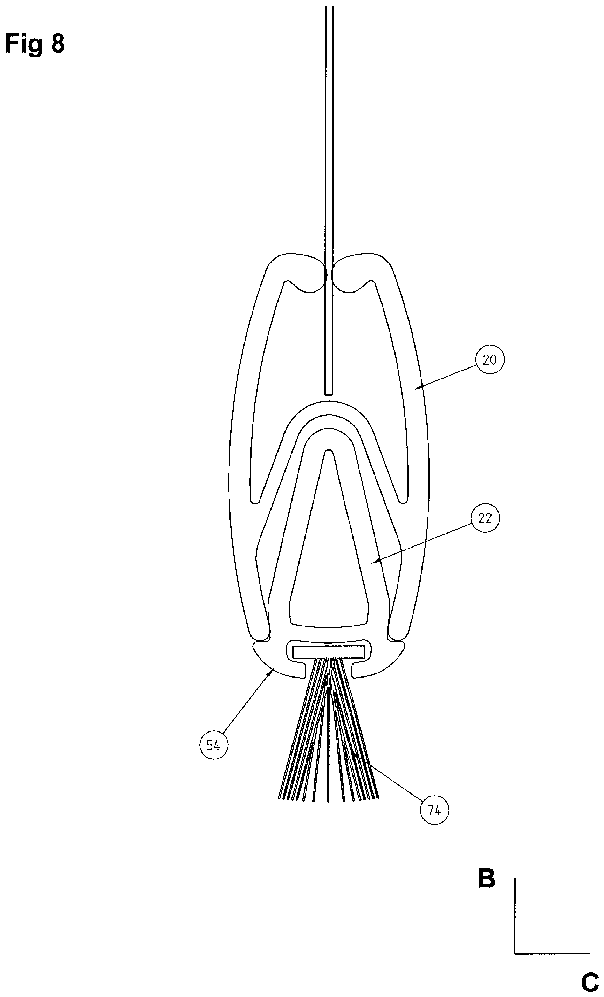

The base 54 of the wedge 22 need not only have a smooth outer surface as described above. The base 54 may be configured to receive and/or support other components. For example, in the arrangement as illustrated in fig. 8, the base 54 includes a lipped channel elongate in the first direction A for receiving a brush or rubber seal 74.

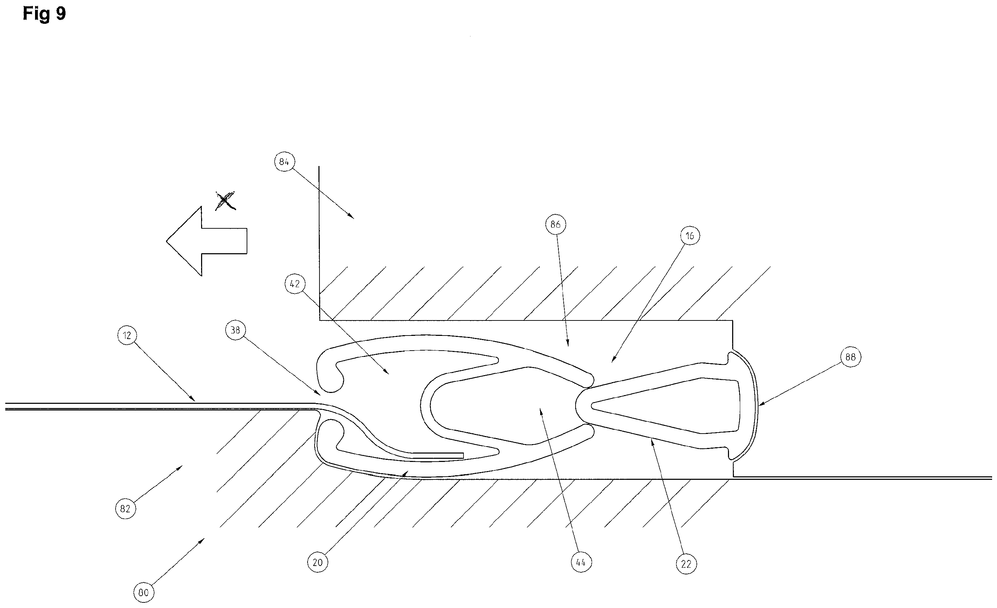

Fig. 9 illustrates schematically an apparatus for use in implementing a method of fitting a fabric 12 to a rail 16 as discussed above.

The apparatus includes a base 80 for supporting the rail profile 20. At one edge, the base 80 includes a raised portion 82 having a height of approximately half the width of the rail profile 20 (in the third direction C as described above). In this way, the raised portion 82 supports the fabric 12 as it passes through the fabric entrance 38 into the fabric channel 42. The apparatus includes a pressing component 84 slidable relative to the base 80 in the direction X. The pressing component 84 includes a cutaway 86 having a height matching the full width of the rail profile 20 in the third direction C such that, with the pressing component 84 resting on the base 80, the rail profile 20 fits closely in the gap formed by the cutaway 86 between the pressing component 84 and the base 80. The cutaway 86 also has a length in the direction X at least able to accommodate both the rail portion 20 and the wedge 22 when in the first relative position as illustrated in fig. 9. By sliding the pressing component 84 over the base 80 in the X direction such that the back wall 88 of the cutaway 86 moves towards the raised portion 82, the back wall 88 presses the wedge 22 into the wedge channel 44 so as to carry out the method of fitting as described above with reference to figures 4(a) to (d).

By using an apparatus such as illustrated schematically in fig. 9 which extends in the first direction A along the entire length of both the rail profile 20 and the wedge 22, it is ensured that the wedge 22 is pressed evenly into the rail profile 20. It ensures that the fabric entrance 38 is closed simultaneously along its entire length such that the fabric 12 is gripped evenly along its entire length simultaneously and without wrinkling.

## Claims

1. A rail (16) for a fabric (12) of a covering (10), the rail including:
a rail profile (20) extending elongately in a first direction (A) and laterally in a second direction (B) between a fabric edge (28) and a wedge edge (30), the second direction being perpendicular to the first direction; and
a wedge (22); wherein:
the rail profile includes:
a first wall (24) extending in the first direction and extending in the second direction between the fabric edge and the wedge edge;
a second wall (26) extending in the first direction and extending in the second direction between the fabric edge and the wedge edge, the first wall being separated from the second wall in a third direction (C) perpendicular to the first and second directions, the first wall having an inner surface (34) and the second wall having an inner surface (36), the inner surface of the first wall facing the inner surface of the second wall; and
a middle wall (32) extending in the first direction and extending from a location on the inner surface of the first wall to a location on the inner surface of the second wall; wherein:
the middle wall, together with the inner surface of the first wall and the inner surface of the second wall between the middle wall and the wedge edge, define therebetween a wedge channel (44) for receiving the wedge, and the middle wall, together with the inner surface of the first wall and the inner surface of the second wall between the middle wall and the fabric edge, define therebetween a fabric channel (42) for receiving a fabric (12) of a covering (10);
the middle wall is at least partially elastic and the first wall, the second wall and the middle wall are configured such that, with the middle wall in a relaxed state, the inner surface of the first wall and the inner surface of the second wall at the fabric edge define therebetween a fabric entrance (38) through which the fabric is able to pass into the fabric channel and the inner surface of the first wall and the inner surface of the second wall at the wedge edge define therebetween a wedge entrance (40) to the wedge channel;
the wedge extends in an elongate direction and has a cross section along the length of the elongate direction including a triangular portion (46) tapering from an apex (48) to a wide portion (50);
**characterized in that**:
the middle wall includes an elongate deflection (64) protruding in the second direction towards the fabric edge and defining the wedge channel with an extension (66) in the second direction towards the fabric edge to accommodate the apex of the wedge when positioned within the wedge channel;
the extension of the middle wall from the inner surface of the first wall to the inner surface of the second wall includes, in succession, extension in the second direction towards the fabric edge, then extension in the third direction, then extension in the second direction towards the wedge edge, thereby to provide the elongate deflection; and
the midpoint of the middle wall between the inner surface of the first wall and the inner surface of the second wall is closer to the fabric edge than to the wedge edge.

2. A rail (16) according to claim 1 wherein said locations from which the middle wall (32) extends from the inner surface (34) of the first wall (24) and to which the middle wall extends to the inner surface (36) of the second wall (26) are closer to the wedge edge (30) than to the fabric edge (28).

3. A rail (16) according to claim 2 wherein said locations from which the middle wall (32) extends from the inner surface (34) of the first wall (24) and to which the middle wall extends to the inner surface (36) of the second wall (26) are spaced from the wedge edge (30) by a length of between one quarter and one third of the distance between the wedge edge and the fabric edge (28).

4. A rail (16) according to any preceding claim wherein the thickness of the middle wall (32) is less than the thickness of the first wall (24) and the thickness of the second wall (26), such that movement of the first wall and the second wall away from each other at the wedge edge (30) causes elastic deformation of the middle wall in preference to deflection of the first wall and the second wall.

5. A rail (16) according to claim 4 wherein the thickness of the middle wall (32) varies along its extension between the inner surface (34) of the first wall (24) and the inner surface (36) of the second wall (34).

6. A rail (16) according to any preceding claim wherein, at the fabric edge (28), the first wall (24) includes a first smooth and rounded surface for gripping one side of the fabric (12) and the second wall (34) includes a second smooth and rounded surface for gripping the other side of the fabric.

7. A rail (16) according to any preceding claim wherein the rail profile (20) is a single extruded component.

8. A rail (16) according to any preceding claim wherein the rail profile (20) is aluminium or an alloy thereof.

9. A rail (16) according to any preceding claim wherein the rail profile (20), with the elongate direction of the wedge (22) parallel with the first direction (A) of the rail profile (20), is configured: to receive, at a first relative position of the wedge, the apex (48) of the wedge in the wedged entrance (40) between the inner surface (34) of the first wall (24) and the inner surface (36) of the second wall (26); to allow the wedge to be moved from the first relative position inwardly into the wedge channel to a second relative position so that the triangular portion (46) rotates the first wall and the second wall about the middle wall (32) and thereby moves the first wall and the second wall away from each other at the wedge edge (30) and moves the first wall and the second wall towards each other at the fabric edge (28) to close the fabric entrance (38) and contact the fabric (12) between the inner surface of the first wall and the inner surface of the second wall; and to allow the wedge to be moved from the second relative position further inwardly into the wedge channel to a third relative position so that the triangular portion rotates the first wall and the second wall about the fabric edge where the first and second walls contact the fabric and thereby further moves the first wall and the second wall away from each other at the wedge edge by elastically deforming the middle wall, the middle wall being configured, in the third relative position, to press resiliently the first wall and the second wall towards each other at the fabric edge so as to press upon and grip the fabric.

10. A rail (16) according to any preceding claim wherein:
the cross-section of the wedge (22) includes, on an opposite side of the wide portion (50) to the apex (48), a tapered portion (52) which tapers inwardly in a direction away from the wide portion.

11. A rail (16) according to claim 10 wherein
at least with the wedge (22) in the third relative position within the wedge channel (44), proximate the wedge edge (30), the inner surfaces (34, 36) of the first and second walls (24, 26) taper inwardly towards each other in a direction towards the wedge edge; and
with the wedge edge in the third relative position within the wedge channel (44), the resilient returning force of the elastic deformation of the middle wall (32) acts to press the inner surfaces of the first and second walls against the tapered portion (52) of the wedge so as to retain the wedge within the wedge channel in the third relative position.

12. A rail (16) according to claim 11 wherein
the rail profile (20) is configured to allow the wedge (22) to be moved from the second relative position to the third relative position via an intermediate relative position at which the resilient returning force of the elastic deformation of the middle wall (32) acts to press the inner surfaces (34, 36) of the first and second walls (24, 26) proximate the wedge edge (30) against the wide portion (50) of the wedge, and to allow the wedge to be moved from the intermediate relative position within the wedge channel (44) further inwardly into the wedge channel to the third relative position, so that the tapered portion (52) of the wedge causes the first wall and second wall to move closer to each other at the wedge edge.

13. A rail (16) according to claim 10, 11 or 12 wherein:
the wedge (22) includes a base (54) and the tapered portion (52) extends between the base and the wide portion (50); and
the base includes, on each opposite side of the cross-section, a respective ledge (54a, 54b) extending in the elongate direction and protruding beyond the tapered portion (52) by the thickness of the respective first and second wall (24, 26) such that, with the wedge in the third relative position within the wedge channel (44), the first and second walls form respective flush surfaces with the respective ledges.

14. A method of fitting a fabric (12) of a covering (10) to a rail (16) according to any preceding claim, the method including:
inserting an edge (28) of the fabric through the fabric entrance (38) of the rail profile (20) and positioning the edge of the fabric within the fabric channel (42) such that the fabric extends through the fabric entrance;
positioning the wedge (22) in the first relative position with the apex (48) of the wedge in the wedge entrance (40) between the inner surface (34) of the first wall (24) and the inner surface (36) of the second wall (26) of the rail profile; and
pressing the wedge in the second direction (B) of the rail profile towards the fabric edge so as to move the wedge from the first relative position to the second relative position thereby rotating the first and second walls about the middle wall (32) until the fabric entrance is closed and the fabric is contacted and held between the first and second walls, and so as then to move the wedge from the second relative position to the third relative position thereby rotating the first and second walls about the fabric edge where the first and second walls contact the fabric whilst elastically deforming the middle wall so that the middle wall provides the resilient returning force to grip the fabric between the first and second walls at the fabric edge.

15. A method according to claim 14 of fitting a fabric (12) of a covering (10) to the rail (16) according to claim 10, wherein, when the wedge (22) is moved from the second relative position to the third relative position, the wedge moves via an intermediate relative position at which the resilient returning force of the elastic deformation of the middle wall (32) acts to press the inner surfaces (34, 36) of the first and second walls (24, 26) proximate the wedge edge (30) against the wide portion (50) of the wedge, the method including moving the wedge from the intermediate relative position within the wedge channel (44) further inwardly into the wedge channel to the third relative position so that the tapered portion (52) of the wedge causes the first wall (24) and second wall (26) to move closer to each other at the wedge edge.

## Patentansprüche

1. Schiene (16) für einen Stoff (12) einer Abdeckung (10), wobei die Schiene beinhaltet:
ein Schienenprofil (20), das sich längs in einer ersten Richtung (A) und seitlich in einer zweiten Richtung (B) zwischen einer Stoffkante (28) und einer Keilkante (30) erstreckt, wobei die zweite Richtung senkrecht zu der ersten Richtung verläuft; und
einen Keil (22); wobei:
das Schienenprofil beinhaltet:
eine erste Wand (24), die sich in der ersten Richtung erstreckt und in der zweiten Richtung zwischen der Stoffkante und der Keilkante erstreckt;
eine zweite Wand (26), die sich in der ersten Richtung erstreckt und sich in der zweiten Richtung zwischen der Stoffkante und der Keilkante erstreckt, wobei die erste Wand von der zweiten Wand in einer dritten Richtung (C) senkrecht zu der ersten und der zweiten Richtung getrennt ist, wobei die erste Wand eine Innenoberfläche (34) aufweist und die zweite Wand eine Innenoberfläche (36) aufweist, wobei die Innenoberfläche der ersten Wand der Innenoberfläche der zweiten Wand gegenüberliegt; und
eine Mittelwand (32), die sich in der ersten Richtung erstreckt und sich von einer Stelle auf der Innenoberfläche der ersten Wand zu einer Stelle auf der Innenoberfläche der zweiten Wand erstreckt; wobei:
die Mittelwand, zusammen mit der Innenoberfläche der ersten Wand und der Innenoberfläche der zweiten Wand zwischen der mittleren Wand und der Keilkante einen Keilkanal (44) zum Aufnehmen des Keils dazwischen definieren, und die Mittelwand zusammen mit der Innenoberfläche der ersten Wand und der Innenoberfläche der zweiten Wand zwischen der Mittelwand und der Stoffkante einen Stoffkanal (42) zum Aufnehmen eines Stoffs (12) einer Abdeckung (10) ausbilden;
die Mittelwand wenigstens teilweise elastisch ist und die erste Wand, die zweite Wand und die Mittelwand derart konfiguriert sind, dass bei entspanntem Zustand der Mittelwand die Innenoberfläche der ersten Wand und die Innenoberfläche der zweiten Wand an der Stoffkante einen Stoffeingang (38) dazwischen definieren, durch den der Stoff in den Stoffkanal eintreten kann, und die Innenoberfläche der ersten Wand und die Innenoberfläche der zweiten Wand an der Keilkante einen Keileingang (40) zu dem Keilkanal dazwischen definieren;
sich der Keil in einer Längsrichtung erstreckt und einen Querschnitt entlang der Länge der Längsrichtung aufweist, der einen dreieckigen Abschnitt (46) beinhaltet, der sich von einem Scheitelpunkt (48) zu einem breiten Abschnitt (50) verjüngt;
**dadurch gekennzeichnet, dass**:
die Mittelwand eine längliche Ablenkung (64) beinhaltet, die in der zweiten Richtung zu der Stoffkante hin vorsteht und den Keilkanal mit einer Verlängerung (66) in der zweiten Richtung zu der Stoffkante hin definiert, um den Scheitelpunkt des Keils aufzunehmen, wenn er innerhalb des Keilkanals positioniert ist;
die Erstreckung der Mittelwand von der Innenoberfläche der ersten Wand zu der Innenoberfläche der zweiten Wand nacheinander eine Erstreckung in der zweiten Richtung zu der Stoffkante, dann eine Erstreckung in der dritten Richtung, dann eine Erstreckung in der zweiten Richtung zu der Keilkante hin beinhaltet, um dadurch die längliche Ablenkung bereitzustellen; und
der Mittelpunkt der Mittelwand zwischen der Innenoberfläche der ersten Wand und der Innenoberfläche der zweiten Wand näher an der Stoffkante als an der Keilkante liegt.

2. Schiene (16) nach Anspruch 1, wobei die Stellen, von denen sich die Mittelwand (32) von der Innenoberfläche (34) der ersten Wand (24) erstreckt und zu denen sich die Mittelwand bis zu der Innenoberfläche (36) der zweiten Wand (26) erstreckt, näher an der Keilkante (30) liegen als an der Stoffkante (28).

3. Schiene (16) nach Anspruch 2, wobei die Stellen, von denen sich die Mittelwand (32) von der Innenoberfläche (34) der ersten Wand (24) erstreckt und zu denen sich die Mittelwand bis zu der Innenoberfläche (36) der zweiten Wand (26) erstreckt, von der Keilkante (30) um eine Länge von zwischen einem Viertel und einem Drittel des Abstands zwischen der Keilkante und der Stoffkante (28) beabstandet sind.

4. Schiene (16) nach einem der vorhergehenden Ansprüche, wobei die Dicke der Mittelwand (32) geringer ist als die Dicke der ersten Wand (24) und die Dicke der zweiten Wand (26), sodass eine Bewegung der ersten Wand und der zweiten Wand voneinander weg an der Keilkante (30) eine elastische Verformung der Mittelwand anstelle einer Ablenkung der ersten Wand und der zweiten Wand bewirkt.

5. Schiene (16) nach Anspruch 4, wobei die Dicke der Mittelwand (32) entlang ihrer Erstreckung zwischen der Innenoberfläche (34) der ersten Wand (24) und der Innenoberfläche (36) der zweiten Wand (34) variiert.

6. Schiene (16) nach einem der vorhergehenden Ansprüche, wobei die erste Wand (24) an der Stoffkante (28) eine erste glatte und abgerundete Oberfläche zum Greifen einer Seite des Stoffs (12) beinhaltet und die zweite Wand (34) eine zweite glatte und abgerundete Oberfläche zum Greifen der anderen Seite des Stoffes beinhaltet.

7. Schiene (16) nach einem der vorhergehenden Ansprüche, wobei das Schienenprofil (20) eine einzelne stranggepresste Komponente ist.

8. Schiene (16) nach einem der vorhergehenden Ansprüche, wobei das Schienenprofil (20) ein Aluminium oder eine Legierung davon ist.

9. Schiene (16) nach einem der vorhergehenden Ansprüche, wobei das Schienenprofil (20), wobei die Längsrichtung des Keils (22) parallel zu der ersten Richtung (A) des Schienenprofils (20) verläuft, dazu konfiguriert ist: an einer ersten relativen Position des Keils den Scheitelpunkt (48) des Keils in dem verkeilten Eingang (40) zwischen der Innenoberfläche (34) der ersten Wand (24) und der Innenoberfläche (36) der zweiten Wand (26) aufzunehmen; zu ermöglichen, dass der Keil von der ersten relativen Position nach innen in den Keilkanal zu einer zweiten relativen Position bewegt wird, sodass der dreieckige Abschnitt (46) die erste Wand und die zweite Wand um die Mittelwand (32) dreht und dadurch die erste Wand und die zweite Wand an der Keilkante (30) voneinander weg bewegt und die erste Wand und die zweite Wand an der Stoffkante (28) aufeinander zu bewegt, um den Stoffeingang (38) zu schließen und den Stoff (12) zwischen der Innenoberfläche der ersten Wand und der Innenoberfläche der zweiten Wand zu berühren; und zu ermöglichen, dass der Keil aus der zweiten relativen Position weiter nach innen in den Keilkanal zu einer dritten relativen Position bewegt wird, sodass der dreieckige Abschnitt die erste Wand und die zweite Wand um die Stoffkante dreht, wo die erste und die zweite Wand den Stoff berühren, und dadurch die erste Wand und die zweite Wand weiter voneinander an der Keilkante durch elastisches Verformen der Mittelwand bewegt, wobei die Mittelwand dazu konfiguriert ist, in der dritten relativen Position die erste Wand und die zweite Wand an der Stoffkante elastisch gegeneinander zu drücken, um auf den Stoff zu drücken und ihn zu greifen.

10. Schiene (16) nach einem der vorhergehenden Ansprüche, wobei:
der Querschnitt des Keils (22) auf einer dem Scheitelpunkt (48) gegenüberliegenden Seite des breiten Abschnitts (50) einen sich verjüngenden Abschnitt (52) beinhaltet, der sich in einer Richtung weg von dem breiten Abschnitt nach innen verjüngt.

11. Schiene (16) nach Anspruch 10, wobei
wenigstens mit dem Keil (22) in der dritten relativen Position innerhalb des Keilkanals (44), in der Nähe der Keilkante (30), sich die Innenoberflächen (34, 36) der ersten und der zweiten Wand (24, 26) nach innen zueinander in einer Richtung zu der Keilkante verjüngen; und
mit der Keilkante in der dritten relativen Position innerhalb des Keilkanals (44) die elastische Rückstellkraft der elastischen Verformung der Mittelwand (32) wirkt, um die Innenoberflächen der ersten und der zweiten Wand gegen den verjüngten Abschnitt (52) des Keils zu drücken, um den Keil innerhalb des Keilkanals in der dritten relativen Position zu halten.

12. Schiene (16) nach Anspruch 11, wobei
das Schienenprofil (20) dazu konfiguriert ist, zu ermöglichen, dass der Keil (22) von der zweiten relativen Position zu der dritten relativen Position über eine relative Zwischenposition, in der die elastische Rückstellkraft der elastischen Verformung der Mittelwand (32) wirkt, um die Innenoberflächen (34, 36) der ersten und der zweiten Wand (24, 26) in die Nähe der Keilkante (30) gegen den breiten Abschnitt (50) des Keils zu drücken und zu ermöglichen, dass der Keil aus der relativen Zwischenposition innerhalb des Keilkanals (44) weiter nach innen in den Keilkanal in die dritte relative Position bewegt wird, sodass der verjüngte Abschnitt (52) des Keils bewirkt, dass sich die erste Wand und die zweite Wand an der Keilkante näher zueinander bewegen.

13. Schiene (16) nach Anspruch 10, 11 oder 12, wobei:
der Keil (22) eine Basis (54) beinhaltet und sich der verjüngte Abschnitt (52) zwischen der Basis und dem breiten Abschnitt (50) erstreckt; und
die Basis auf jeder gegenüberliegenden Seite des Querschnitts eine jeweilige Leiste (54a, 54b) beinhaltet, die sich in der Längsrichtung erstreckt und über den verjüngten Abschnitt (52) um die Dicke der jeweiligen ersten und zweiten Wand (24, 26) vorsteht, sodass, wenn sich der Keil in der dritten relativen Position innerhalb des Keilkanals (44) befindet, die erste und die zweite Wand jeweilige bündige Oberflächen mit den jeweiligen Leisten ausbilden.

14. Verfahren zum Anbringen eines Stoffs (12) einer Abdeckung (10) an einer Schiene (16) nach einem der vorhergehenden Ansprüche, wobei das Verfahren beinhaltet:
Einführen einer Kante (28) des Stoffes durch den Stoffeingang (38) des Schienenprofils (20) und Positionieren der Kante des Stoffes innerhalb des Stoffkanals (42), sodass sich der Stoff durch den Stoffeingang erstreckt;
Positionieren des Keils (22) in der ersten relativen Position, wobei der Scheitelpunkt (48) des Keils in dem Keileingang (40) zwischen der Innenoberfläche (34) der ersten Wand (24) und der Innenoberfläche (36) der zweiten Wand (26) des Schienenprofils ist; und
Drücken des Keils in die zweite Richtung (B) des Schienenprofils gegen die Stoffkante, um den Keil aus der ersten relativen Position in die zweite relative Position zu bewegen, wodurch die erste und die zweite Wand um die Mittelwand (32) gedreht werden, bis der Stoffeingang geschlossen ist und der Stoff zwischen der ersten und der zweiten Wand berührt und gehalten wird, und um dann den Keil aus der zweiten relativen Position in die dritte relative Position zu bewegen, wodurch die erste und die zweite Wand um die Stoffkante gedreht werden, wo die erste und die zweite Wand den Stoff berühren, während die Mittelwand elastisch verformt wird, sodass die Mittelwand die elastische Rückstellkraft bereitstellt, um den Stoff zwischen der ersten und der zweiten Wand an der Stoffkante zu greifen.

15. Verfahren nach Anspruch 14 zum Anbringen eines Stoffes (12) einer Abdeckung (10) an der Schiene (16) nach Anspruch 10, wobei sich der Keil (22) bei der Bewegung von der zweiten relativen Position in die dritte relative Position über eine relative Zwischenposition bewegt, in der die elastische Rückstellkraft der elastischen Verformung der Mittelwand (32) wirkt, um die Innenoberflächen (34, 36) der ersten und der zweiten Wand (24, 26) in der Nähe der Keilkante (30) gegen den breiten Abschnitt (50) des Keils zu drücken, wobei das Verfahren das Bewegens des Keils aus der relativen Zwischenposition innerhalb des Keilkanals (44) weiter nach innen in den Keilkanal in die dritte relative Position beinhaltet, sodass der verjüngte Abschnitt (52) des Keils bewirkt, dass sich die erste Wand (24) und die zweite Wand (26) an der Keilkante näher zueinander bewegen.

## Revendications

1. Rail (16) pour un tissu (12) d'une couverture (10), le rail incluant :
un profilé de rail (20) s'étendant de façon oblongue dans une première direction (A) et latéralement dans une deuxième direction (B) entre un bord de tissu (28) et un bord de clavette (30), la deuxième direction étant perpendiculaire à la première direction ; et
une clavette (22) ; dans lequel :
le profilé de rail inclut :
une première paroi (24) s'étendant dans la première direction et s'étendant dans la deuxième direction entre le bord de tissu et le bord de clavette ;
une seconde paroi (26) s'étendant dans la première direction et s'étendant dans la deuxième direction entre le bord de tissu et le bord de clavette, la première paroi étant séparée de la seconde paroi dans une troisième direction (C) perpendiculaire aux première et deuxième directions, la première paroi ayant une surface intérieure (34) et la seconde paroi ayant une surface intérieure (36), la surface intérieure de la première paroi faisant face à la surface intérieure de la seconde paroi ; et
une paroi médiane (32) s'étendant dans la première direction et s'étendant depuis un emplacement sur la surface intérieure de la première paroi jusqu'à un emplacement sur la surface intérieure de la seconde paroi ; dans lequel :
la paroi médiane conjointement avec la surface intérieure de la première paroi et la surface intérieure de la seconde paroi, entre la paroi médiane et le bord de clavette, définissent, entre ceux-ci, une gorge de clavette (44) destinée à recevoir la clavette, et la paroi médiane conjointement avec la surface intérieure de la première paroi et la surface intérieure de la seconde paroi, entre la paroi médiane et le bord de tissu, définissent entre ceux-ci, une gorge de tissu (42) destinée à recevoir un tissu (12) d'une couverture (10) ;
la paroi médiane est au moins partiellement élastique et la première paroi, la seconde paroi, et la paroi médiane sont configurées de manière telle que, avec la paroi médiane dans un état relâché, la surface intérieure de la première paroi et la surface intérieure de la seconde paroi au niveau du bord de tissu définissent entre celles-ci une entrée de tissu (38) à travers laquelle le tissu peut passer dans la gorge de tissu, et la surface intérieure de la première paroi et la surface intérieure de la seconde paroi, au niveau du bord de clavette, définissent entre celles-ci une entrée de clavette (40) donnant sur la gorge de clavette ;
la clavette s'étend dans une direction oblongue et a une section transversale le long de la longueur de la direction oblongue incluant une partie triangulaire (46) s'effilant depuis un sommet (48) jusqu'à une partie large (50) ;
**caractérisé en ce que** :
la paroi médiane inclut une flexion oblongue (64) faisant saillie dans la deuxième direction vers le bord de tissu et définissant la gorge de clavette avec une extension (66) dans la deuxième direction vers le bord de tissu pour loger le sommet de la clavette lorsqu'elle est positionnée à l'intérieur de la gorge de clavette ;
l'extension de la paroi médiane depuis la surface intérieure de la première paroi jusqu'à la surface intérieure de la seconde paroi inclut, en succession, une extension dans la deuxième direction vers le bord de tissu, puis une extension dans la troisième direction, puis une extension dans la deuxième direction vers le bord de clavette, pour fournir ainsi la flexion oblongue ; et
le point médian de la paroi médiane entre la surface intérieure de la première paroi et la surface intérieure de la seconde paroi est plus proche du bord de tissu que du bord de clavette.

2. Rail (16) selon la revendication 1, dans lequel lesdits emplacements depuis lesquels la paroi médiane (32) s'étend depuis la surface intérieure (34) de la première paroi (24) et jusqu'auxquels la paroi médiane s'étend jusqu'à la surface intérieure (36) de la seconde paroi (26) sont plus proches du bord de clavette (30) que du bord de tissu (28).

3. Rail (16) selon la revendication 2, dans lequel lesdits emplacements depuis lesquels la paroi médiane (32) s'étend depuis la surface intérieure (34) de la première paroi (24) et jusqu'auxquels la paroi médiane s'étend jusqu'à la surface intérieure (36) de la seconde paroi (26) sont espacés du bord de clavette (30) par une longueur d'entre un quart et un tiers de la distance entre le bord de clavette et le bord de tissu (28).

4. Rail (16) selon une quelconque revendication précédente, dans lequel l'épaisseur de la paroi médiane (32) est inférieure à l'épaisseur de la première paroi (24) et l'épaisseur de la seconde paroi (26), de manière telle qu'un mouvement de la première paroi et de la seconde paroi en éloignement l'une de l'autre au niveau du bord de clavette (30) entraîne une déformation élastique de la paroi médiane de préférence à la flexion de la première paroi et de la seconde paroi.

5. Rail (16) selon la revendication 4, dans lequel l'épaisseur de la paroi médiane (32) varie le long de son extension entre la surface intérieure (34) de la première paroi (24) et la surface intérieure (36) de la seconde paroi (34).

6. Rail (16) selon une quelconque revendication précédente, dans lequel, au niveau du bord de tissu (28), la première paroi (24) inclut une première surface lisse et arrondie destinée à entrer en prise avec un côté du tissu (12) et la seconde paroi (34) inclut une seconde surface lisse et arrondie destinée à entrer en prise avec l'autre côté du tissu.

7. Rail (16) selon une quelconque revendication précédente, dans lequel le profilé de rail (20) est un seul composant extrudé.

8. Rail (16) selon une quelconque revendication précédente, dans lequel le profilé de rail (20) est en aluminium ou un alliage de celui-ci.

9. Rail (16) selon une quelconque revendication précédente, dans lequel le profilé de rail (20), avec la direction oblongue de la clavette (22) parallèle à la première direction (A) du profilé de rail (20), est configuré : pour recevoir, au niveau d'une première position relative de la clavette, le sommet (48) de la clavette dans l'entrée de clavette (40) entre la surface intérieure (34) de la première paroi (24) et la surface intérieure (36) de la seconde paroi (26) ; pour permettre à la clavette d'être mise en mouvement depuis la première position relative vers l'intérieur, dans la gorge de clavette, jusqu'à une deuxième position relative, de telle sorte que la partie triangulaire (46) fait pivoter la première paroi et la seconde paroi autour de la paroi médiane (32) et met ainsi en mouvement la première paroi et la seconde paroi en éloignement l'une de l'autre au niveau du bord de clavette (30) et met en mouvement la première paroi et la seconde paroi l'une vers l'autre au niveau du bord de tissu (28) pour fermer l'entrée de tissu (38) et mettre en contact le tissu (12) entre la surface intérieure de la première paroi et la surface intérieure de la seconde paroi ; et pour permettre à la clavette d'être mise en mouvement depuis la deuxième position relative davantage vers l'intérieur, dans la gorge de clavette, jusqu'à une troisième position relative, de telle sorte que la partie triangulaire fait pivoter la première paroi et la seconde paroi autour du bord de tissu où les première et seconde parois entrent en contact avec le tissu et met ainsi davantage en mouvement la première paroi et la seconde paroi en éloignement l'une de l'autre au niveau du bord de clavette en déformant élastiquement la paroi médiane, la paroi médiane étant configurée, dans la troisième position relative, pour presser de façon résiliente la première paroi et la seconde paroi l'une vers l'autre au niveau du bord de tissu afin de presser contre, et d'entrer en prise avec, le tissu.

10. Rail (16) selon une quelconque revendication précédente, dans lequel :
la section transversale de la clavette (22) inclut, sur un côté opposé de la partie large (50) par rapport au sommet (48), une partie inclinée (52) qui s'incline vers l'intérieur dans une direction en éloignement de la partie large.

11. Rail (16) selon la revendication 10, dans lequel
au moins avec la clavette (22) dans la troisième position relative à l'intérieur de la gorge de clavette (44), à proximité du bord de clavette (30), les surfaces intérieures (34, 36) des première et seconde parois (24, 26) s'inclinent vers l'intérieur l'une vers l'autre dans une direction vers le bord de clavette ; et
avec le bord de clavette dans la troisième position relative à l'intérieur de la gorge de clavette (44), la force de rappel résiliente de la déformation élastique de la paroi médiane (32) agit pour presser les surfaces intérieures des première et seconde parois contre la partie inclinée (52) de la clavette afin de retenir la clavette à l'intérieur de la gorge de clavette dans la troisième position relative.

12. Rail (16) selon la revendication 11, dans lequel
le profilé de rail (20) est configuré pour permettre à la clavette (22) d'être mise en mouvement depuis la deuxième position relative jusqu'à la troisième position relative par l'intermédiaire d'une position relative intermédiaire au niveau de laquelle la force de rappel résiliente de la déformation élastique de la paroi médiane (32) agit pour presser les surfaces intérieures (34, 36) des première et seconde parois (24, 26) à proximité du bord de clavette (30) contre la partie large (50) de la clavette, et pour permettre à la clavette d'être mise en mouvement depuis la position relative intermédiaire à l'intérieur de la gorge de clavette (44) davantage vers l'intérieur, dans la gorge de clavette, jusqu'à la troisième position relative, de telle sorte que la partie inclinée (52) de la clavette amène la première paroi et la seconde paroi à se mettre en mouvement plus proche l'une de l'autre au niveau du bord de clavette.

13. Rail (16) selon la revendication 10, 11, ou 12, dans lequel :
la clavette (22) inclut une base (54) et la partie inclinée (52) s'étend entre la base et la partie large (50) ; et
la base inclut, sur chaque côté opposé de la section transversale, un rebord respectif (54a, 54b) s'étendant dans la direction oblongue et faisant saillie au-delà de la partie inclinée (52) selon l'épaisseur des première et seconde parois respectives (24, 26) de manière telle que, avec la clavette dans la troisième position relative à l'intérieur de la gorge de clavette (44), les première et seconde parois forment des surfaces au ras respectives avec les rebords respectifs.

14. Procédé d'ajustement d'un tissu (12) d'une couverture (10) sur un rail (16) selon une quelconque revendication précédente, le procédé incluant les faits :
d'insérer un bord (28) du tissu à travers l'entrée de tissu (38) du profilé de rail (20) et de positionner le bord du tissu à l'intérieur de la gorge de tissu (42) de manière telle que le tissu s'étend à travers l'entrée de tissu ;
de positionner la clavette (22) dans la première position relative avec le sommet (48) de la clavette dans l'entrée de clavette (40) entre la surface intérieure (34) de la première paroi (24) et la surface intérieure (36) de la seconde paroi (26) du profilé de rail ; et
de presser la clavette dans la deuxième direction (B) du profilé de rail vers le bord de tissu afin de mettre en mouvement la clavette depuis la première position relative jusqu'à la deuxième position relative, faisant ainsi pivoter les première et seconde parois autour de la paroi médiane (32) jusqu'à ce que l'entrée de tissu soit fermée et les première et seconde parois entrent en contact avec le tissu et le tissu soit retenu entre celles-ci, et afin ensuite de mettre en mouvement la clavette depuis la deuxième position relative jusqu'à la troisième position relative, faisant ainsi pivoter les première et seconde parois autour du bord de tissu où les première et seconde parois entrent en contact avec le tissu tout en déformant élastiquement la paroi médiane de telle sorte que la paroi médiane fournit la force de rappel résiliente pour mettre en prise le tissu entre les première et seconde parois au niveau du bord de tissu.

15. Procédé selon la revendication 14 d'ajustement d'un tissu (12) d'une couverture (10) sur le rail (16) selon la revendication 10, dans lequel, lorsque la clavette (22) est mise en mouvement depuis la deuxième position relative jusqu'à la troisième position relative, la clavette se met en mouvement par l'intermédiaire d'une position relative intermédiaire au niveau de laquelle la force de rappel résiliente de la déformation élastique de la paroi médiane (32) agit pour presser les surfaces intérieures (34, 36) des première et seconde parois (24, 26) à proximité du bord de clavette (30) contre la partie large (50) de la clavette, le procédé incluant le fait de mettre en mouvement la clavette depuis la position relative intermédiaire à l'intérieur de la gorge de clavette (44) davantage vers l'intérieur, dans la gorge de clavette, jusqu'à la troisième position relative, de telle sorte que la partie inclinée (52) de la clavette amène la première paroi (24) et la seconde paroi (26) à se mettre en mouvement plus proche l'une de l'autre au niveau du bord de clavette.
